# EUROPÄISCHE PATENTSCHRIFT

(11) **EP 1 323 685 B1**
(45) Veröffentlichungstag und Bekanntmachung des Hinweises auf die Patenterteilung: **12.04.2006**
(21) Anmeldenummer: 02028769.4
(22) Anmeldetag: 23.12.2002
(51) Int. Cl.: C04B 35/573, C04B 35/83, C04B 35/80, F16D 69/02, F16D 65/12, F16D 13/64

(54) **Verfahren zur Herstellung von Formkörpern aus faserverstärkten keramischen Materialien**
Method of production of shaped bodies out of fibre reinforced ceramic materials
Procédé de fabrication des corps moulés de matériaux céramiques à renfort de fibres

(30) Priorität: 31.12.2001 DE 10164231
(43) Veröffentlichungstag der Anmeldung: 02.07.2003
(73) Patentinhaber: AUDI AG, 85045 Ingolstadt (DE)
(72) Erfinder: Bauer, Moritz, 86153 Augsburg (DE); Heine, Michael, Dr., 86695 Allmannshofen (DE); Kienzle, Andreas, Dr., 86672 Thierhaupten (DE); Hüner, Ronald, Dr., 86674 Baar (DE); Rahn, Andreas, 86637 Wertingen (DE); Zimmermann-Chopin, Rainer, Dr., 86679 Ellgau (DE)
(74) Vertreter: Deckers, Hellmuth Alexander

(56) Entgegenhaltungen:
- FR-A- 2 637 534
- US-A- 2 965 931
- US-B1- 6 231 791
- US-B1- 6 261 981

## Beschreibung

Die vorliegende Erfindung bezieht sich auf ein Verfahren zur Herstellung von Formkörpern aus faserverstärkten keramischen Materialien. Insbesondere betrifft die Erfindung ein Verfahren zur endkonturnahen Herstellung eines porösen faserverstärkten Kohlenstoff-haltigen Formkörpers, insbesondere eines faserverstärkten C/C-Körpers (mit Köhlenstoffasem verstärkter Kohlenstoff, engl. "CFC" oder "CFRC", carbon fibre reinforced carbon), der aus binderhaltigen Faserstoffmassen mittels eines Preßvorganges geformt und in einer nachfolgenden thermischen Behandlung zu C/C umgesetzt wird, sowie gegebenenfalls die Nachverdichtung dieses porösen faserverstärkten Kohlenstoff-haltigen Formkörpers unter Ausbildung einer keramischen Matrix, insbesondere durch eine Flüssigmetall-Infiltration in den C/C-Körper, gegebenenfalls mit anschließender Wärmebehandlung, wobei die Matrix dann Metalle und die durch Reaktion mit dem Kohlenstoff gebildeten Metallcarbide sowie gegebenenfalls Reste von nicht umgesetztem Kohlenstoff enthält.

Das erfindungsgemäße Verfahren betrifft insbesondere die Herstellung von mit Kohlenstoffasern verstärkten keramischen Verbundwerkstoffen, die gegebenenfalls Ausnehmungen und Hohlräume aufweisen, welche über die Flüssigmetallinfiltration mit Siliciumschmelzen unter Reaktion zumindest eines Teils des Kohlenstoffs zu Siliciumcarbid in mit Kohlenstoffasern verstärkte Verbundwerkstoffe mit SiC -haltiger oder Kohlenstoff-, SiC- und Si-haltiger Matrix (C/SiC- oder C/C-SiC-Werkstoffe) umgesetzt werden. Anwendung finden diese Verbundwerkstoffe insbesondere bei Brems-, Kupplungs- und Reibscheiben, sowie als hochtemperaturbeständige Konstruktionswerkstoffe.

Heutzutage überwiegend verwendete Materialien für Bremsscheiben im Automobilbau sind Stahl oder Grauguß, und in der Luftfahrt mit Kohlenstoffasern verstärkte Kohlenstoff-Werkstoffe (C/C). Die von den Scheibenmaterialien geforderten Eigenschaften sind dabei hohe mechanische Stabilität, Temperaturbeständigkeit, Härte und Verschleißfestigkeit gegenüber dem Reibpartner in der Reibpaarung der Bremse. Die Einsatztemperatur bisher verwendeter Graugußbremsscheiben ist dabei durch den Schmelzpunkt des Materials limitiert. Die mechanische Versagenstemperatur liegt abhängig von der Belastung, bereits deutlich unterhalb des Schmelzpunktes. Weiterhin tritt durch Umwandlung des metallischen Gefüges beim Erhitzen die Gefahr einer Rißbildung in den Scheiben auf. Die Verwendung von faserverstärkter Keramik als Werkstoff für Bremsscheibenanwendungen erweist sich als Lösung für diese Problematik. Insbesondere Werkstoffe auf der Basis von mit Kohlenstoffasern verstärktem Siliciumcarbid (C/SiC) haben sich für diese Anwendung als geeignet erwiesen. Die Vorteile dieses Materials sind die niedrigere Dichte (damit niedrigeres Gewicht bei gleichem Volumen), die hohe Härte und Temperaturbeständigkeit bis ca. 1400 °C und nicht zuletzt die extrem hohe Verschleißbeständigkeit. Die deutlich geringere Dichte von Bremsscheiben aus diesen C/SiC-Werkstoffen erweist sich als positiver Einflußfaktor zur Verbesserung des Komforts und der Sicherheit durch die Reduktion der ungefederten Massen bei Kraftfahrzeugen und als wirtschaftlicher Faktor im Bereich der Luftfahrt. Die große Härte und Verschleißbeständigkeit von C/SiC-Bauteilen ermöglicht hier weit höhere Standzeiten im Vergleich zu bisher üblichen Materialien auf C/C-Basis oder Metallbasis.

Verfahren zur Herstellung von C/SiC-Bauteilen sind beispielsweise aus den Schriften DE-A 198 56 721, DE-C 197 11 829 und DE-A 197 10 105 bekannt und umfassen unter anderem die folgenden Schritte :
- Herstellen einer preßfähigen Mischung oder bildbaren Masse aus kohlenstoffhaltigen Fasern oder Faserbündeln, die mit einer Beschichtung überzogen sein können, einerseits und Füllmitteln und/oder Bindemitteln wie beispielsweise Harzen und/oder Pech andererseits,
- Formgebung der Mischung unter Druck und. Temperatur und Carbonisierung der Kohlenstoff-haltigen Füll- und Bindemittel zur Herstellung eines Formkörpers, insbesondere eines aus mit Kohlenstoffasern verstärktem Kohlenstoff bestehenden Formkörpers (C/C) und gegebenenfalls Gräphitierung
- Infiltrieren zumindest einer Randschicht des Formkörpers mit einer Silicium-Schmelze und zumindest partielle Reaktion mit dem Kohlenstoff im Formkörper zu SiC, wobei sich ein Formkörper bildet, der wenigstens in der Randschicht aus einer Verbundkeramik mit in einer Matrix aus überwiegend SiC, Si und C eingebetteten, Kohlenstoff-haltigen Fasern besteht (hier ebenfalls als C/SiC bezeichnet).

Im folgenden soll unter C/SiC-Werkstoffen allgemein auch die Werkstoffvariante verstanden werden, bei der wie oben beschrieben nur eine Randschicht siliciert wird.

Unter einer bildbaren Faserstoffmasse sind sowohl die faserhaltigen preßfähigen Massen, die typischerweise Kurzfasern oder Kurzfaserbündel enthalten, als auch Matten, Gewebe, oder Vliese, die sich unter anderem in Prepregtechnik verarbeiten lassen, zusammengefaßt. Letztere sind insbesondere auch dazu geeignet, nahezu oder ganz ohne Druckeinwirkung geformt zu werden

Zu den üblichen Herstellungsverfahren gehören auch diejenigen, bei denen der C/C-Körper über die Flüssig- oder Gas-Phase mit Kohlenstoff-Vorläufern ("carbon precursors", Substanzen, die beim Erhitzen unter Ausschluß von oxydierenden Medien Kohlenstoff bilden) oder mit Kohlenstoff nachverdichtet wird, oder die Matrix aus überwiegend SiC, Si und C durch eine Gasphaseninfiltration (CVD, Chemical Vapour Deposition, oder CVI, Chemical Vapour Infiltration) oder durch die Pyrolyse von Si-haltigen präkeramischen Polymeren erzeugt wird.

Bei dem Pressen der Grünkörper wird im allgemeinen die zur thermischen Härtung der Binder erforderliche Wärme von außen in die preßfähige Masse beziehungsweise das Werkstück eingebracht, indem die Presse oder zumindest der Preßstempel erhitzt wird. Dabei wird der äußere Bereich des Werkstücks auf höhere Temperaturen erhitzt als der innere Bereich, damit durch den Temperaturgradienten die Wärme ins Innere des Werkstücks transportiert werden kann. Diese ungleichmäßige Erwärmung führt zu einer ungleichmäßigen Härtung und kann zu Verspannungen im Werkstück führen; die in der äußeren Zone ablaufenden chemischen und physikalischen Vorgänge können sogar auch dazu führen, daß beispielsweise bei der Erwärmung und den dabei ablaufenden chemischen Reaktionen freiwerdende Gase nicht durch die äußere Zone entweichen können und zum Platzen des Werkstücks oder zu Rissen in dem Werkstück beitragen. Zudem liegt die Gesamtdauer des Preßvorganges, die Preß-Zykluszeit, unerwünscht hoch, da alle im Kontakt mit der Preßmasse stehenden Pressenteile, die mitunter eine erhebliche Wärmekapazität besitzen, beheizt und wieder abgekühlt werden müssen. Dies äußert sich auch in einem hohen Energieverbrauch.

Aufgabe der Erfindung ist es daher, ein Verfahren insbesondere mit kurzen Zykluszeiten und geringem Energieverbrauch beim Preßvorgang bereitzustellen, das zur Herstellung von faserverstärkten Kohlenstoff-haltigen Grünkörpern oder Vorkörpern geeignet ist, die gegebenenfalls anschließend durch Infiltration mit flüssigen Metallen, insbesondere flüssigem Silicium und nachfolgenden Reaktion in Formkörper aus faserverstärkter carbidischer Keramik überführt werden.

Diese Aufgabe wird erfindungsgemäß dadurch gelöst, daß solche Preßmassen eingesetzt werden, die eine elektrische Leitfähigkeit aufweisen, die geeignet ist vor, während oder nach dem Pressen durch Hindurchleiten von elektrischem Strom zumindest einen Teil der zur Härtung benötigten Wärmeenergie als Joule'sche Wärme zu entwickeln.

Die Erfindung betrifft daher ein Verfahren zur Herstellung von Formkörpern aus faserverstärkten keramischen Materialien, wobei
im ersten Schritt eine preßfähige Masse in eine Preßform gefüllt wird, wobei die preßfähige Masse Kohlenstoffasern und/oder Kohlenstoffaserbündel und/oder Kohlenstoffilamente, die in bevorzugter Weise mit Kohlenstoff oder Kohlenstoff-haltigen Verbindungen beschichtet wurden, und Pech und/oder Harze enthält, welche thermisch aushärtbar und carbonisierbar sind,
im zweiten Schritt die preßfähige Masse durch Erwärmen auf eine Temperatur von 120 °C bis 280 °C unter Druck zu einem Grünkörper verfestigt wird,
- im dritten Schritt der Grünkörper durch Erhitzen in einer nicht oxidierenden Atmosphäre auf eine Temperatur von ca. 750 °C bis ca. 2400 °C zu einem C/C-Körper carbonisiert und/oder graphitiert wird, und gegebenenfalls
- im vierten Schritt der C/C-Körper unter Erhalt seiner Form mit flüssigem Metall infiltriert wird, wobei zumindest teilweise eine Reaktion des Kohlenstoff-Anteils der Matrix des C/C-Körpers mit dem Metall unter Bildung von Carbiden abläuft,
dadurch gekennzeichnet, daß im zweiten oder dritten Schritt die Erwärmung zumindest anteilsweise dadurch bewirkt wird, daß ein elektrischer Strom durch die preßfähige Masse, oder den Grünkörper geleitet wird. Als elektrisch leitende Komponenten treten dabei im wesentlichen Kohlenstoffasern, Kohlenstoffaserbündel und mit Kohlenstoff beschichtete Fasern auf.

Eine ausreichende Erwärmung durch den Stromfluß beim Preßvorgang setzt ein ausgewogenes Verhältnis zwischen elektrischem Widerstand und angelegter Spannung voraus. Dabei ist der Niederspannungsbereich bevorzugt, typischerweise mit Spannungen unterhalb von 250 V.

Die preßfähige Masse, der Grünkörper und/oder der verfestigte Grünkörper weisen dazu bevorzugt eine elektrische Leitfähigkeit von mindestens 0,1 S/m auf, insbesondere im Bereich von 0,1 S/m bis 100 S/m. Die Leitfähigkeit liegt bevorzugt im Bereich von 1 bis 50 S/m und besonders bevorzugt im Bereich von 2 bis 10 S/m.

Bevorzugt wird die Leitfähigkeit der Preßmasse beim Verpressen und der sich beim Preßvorgang bildenden Grünkörper so gewählt, daß sich bei den bevorzugten Spannungen von bis zu 150 V und Strömen unterhalb 500 A die zur Härtung bevorzugten Temperaturen um 100 bis 280 °C einstellen lassen.

In einer bevorzugten Ausführungsform werden in der preßfähigen Masse Kohlenstoffasern in Form von beschichteten Kurzfaserbündeln eingesetzt. Besonders bevorzugt sind hierbei mit graphitiertem Kohlenstoff beschichtete Fasern beziehungsweise Faserbündel mit mittleren Längen unterhalb von 50 mm.

Als thermisch aushärtbare Binder werden Peche wie Kohlenteerpech oder Erdölpech und/oder Harze wie Phenolharze, Epoxidharze, Polyimide, füllstoffhaltige Mischungen mit Furfurylalkohol oder Furanharze eingesetzt. Die preßfähigen Massen werden unter Temperatureinwirkung ausgehärtet, bevorzugt bei Temperaturen von 100 bis 280 °C.

Besonders bei der Verwendung von langfaser- oder gewebeverstärkten bildbaren Massen kann die thermische Aushärtung auch nahezu drucklos erfolgen. Dies ist typischerweise bei nach der PrepregTechnik oder dem Laminieren hergestellten Formkörpern der Fall. Auf eine Preßvorrichtung kann hier gegebenenfalls vollständig verzichtet werden.

Durch die Carbonisierung oder Graphitierung des Grünkörpers wird ein poröser C/C-Körper erhalten, der sich weiterbearbeiten läßt. Er kann mechanisch z. B. durch Bohren, Drehen oder Fräsen nachbearbeitet oder wiederum zu komplexeren Strukturen zusammengesetzt oder geklebt werden.

In weiteren Schritten kann der poröse C/C-Körper auch mit thermisch aushärtbaren und carbonisierbaren Bindern, oder Polymeren nachverdichtet und erneut carbonisiert werden, um zu einem Material mit höherer Dichte und höherem Kohlenstoffanteil zu gelangen.

In einer bevorzugten Ausführungsform des erfindungsgemäßen Verfahrens wird der Kohlenstoff des C/C-Körpers in einem vierten Schritt durch eine Schmelzinfiltration mit Metallen und eine gegebenenfalls anschließende Wärmebehandlung wenigstens teilweise zu den entsprechenden Carbiden umgesetzt. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, nicht umgesetzten Kohlenstoff sowie nicht umgesetztes Silicium. Hierzu wird der C/C-Körper typischerweise mit Siliciumpulver überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann das Flüssigsilicierverfahren auch mit Siliciumlegierungen durchgeführt werden, die unter anderem Metalle wie Cr, Fe, Co, Ni, Ti und/oder Mo enthalten können.

Das beschriebene Verfahren kann bevorzugt zur Herstellung von Bremsscheiben oder Kupplungsscheiben verwendet werden.

Hierzu wird eine Preßform, die die gewünschten Außenkonturen aufweist, mit der preßfähigen Masse gefüllt und die Preßstempel zusammengefahren, wobei der elektrische Strom über die Deck- und Bodenfläche der Preßform in die Preßmasse eingeleitet wird. Da der elektrische Widerstand der Masse insbesondere mit der Dichte während des Preßvorganges variiert, sind die angelegte Spannung oder die Stromstärke ebenfalls über den gesamten Preßvorgang variabel zu gestalten. Im Gegensatz zu einer Erwärmung durch Wärmeleitung von außen wird hierdurch eine gleichmäßige Erwärmung über den Querschnitt und über die Höhe des sich bildenden Grünkörpers oder Werkstücks erreicht.

Der gehärtete Grünkörper wird dann wie oben beschrieben weiterbearbeitet, d. h. carbonisiert und/oder graphitiert und anschließend durch Schmelzinfiltration mit flüssigen Metallen, bevorzugt flüssigem Silicium, zumindest teilweise in die entsprechenden Carbide überführt.

Im Grünzustand oder im carbonisierten Zustand können die benötigten Bohrungen zur Befestigung der Brems- oder Kupplungsscheiben sowie, falls gewünscht, Hohlräume und Ausnehmungen zur Belüftung durch die geläufigen mechanischen Bearbeitungsverfahren wie Bohren, Drehen und Fräsen in die Werkstücke eingebracht werden.

## Patentansprüche

1. Verfahren zur Herstellung von Formkörpern aus faserverstärkten keramischen Materialien, wobei
- im ersten Schritt eine preßfähige Masse in eine Preßform gefüllt wird, wobei die preßfähige Masse Kohlenstoffasern und/oder Kohlenstoffaserbündel und/oder Kohlenstoffilamente und Peche und/oder Harze enthält, welche thermisch aushärtbar und carbonisierbar sind,
- im zweiten Schritt die preßfähige Masse durch Erwärmen auf eine Temperatur von 120 °C bis 280 °C unter Druck zu einem Grünkörper verfestigt wird,
- im dritten Schritt der Grünkörper durch Erhitzen in einer nicht oxydierenden Atmosphäre auf eine Temperatur von ca. 750 °C bis ca. 2400 °C zu einem C/C-Körper carbonisiert und/oder graphitiert wird,
**dadurch gekennzeichnet, daß** die Erwärmung im zweiten und/oder dritten Schritt zumindest anteilsweise **dadurch** bewirkt wird, daß ein elektrischer Strom beim Preßvorgang durch die preßfähige Masse und/oder den verfestigten Grünkörper geleitet wird.

2. Verfahren nach Anspruch 1, **dadurch gekennzeichnet, daß** anschließend an den dritten Schritt
- im vierten Schritt der C/C-Körper unter Erhalt seiner Form mit flüssigem Metall infiltriert wird, wobei zumindest teilweise eine Reaktion des Kohlenstoff-Anteils der Matrix des C/C-Körpers mit dem Metall unter Bildung von Carbiden abläuft.

3. Verfahren nach Anspruch 1, **dadurch gekennzeichnet, daß** die elektrische Leitfähigkeit der preßfähigen Masse vor oder während des Preßvorganges mindestens 0,1 S/m beträgt.

4. Verfahren nach Anspruch 1, **dadurch gekennzeichnet, daß** die elektrische Leitfähigkeit des Grünkörpers mindestens 0,1 S/m beträgt.

5. Verfahren nach Anspruch 1, **dadurch gekennzeichnet, daß** die preßfähige Masse durch Hindurchleiten von elektrischem Strom über die Deck- und Bodenfläche einer Preßform erwärmt wird.

## Revendications

1. Procédé de préparation de corps moulés à base de matériaux céramiques renforcés par fibres, où
- dans une première étape, on remplit un moule de pressage à l'aide d'une masse pressable, où la dite masse pressable contient des fibres de carbone et/ou des faisceaux de fibres de carbone et/ou des filaments de carbone, et des poix et/ou des résines, qui sont thermodurcissables et carbonisables,
- dans une deuxième étape, la masse pressable est renforcée par chauffage à une température allant de 120°C à 280°C sous pression, en un corps vert ;
- dans une troisième étape, le corps vert est carbonisé ou graphité par chauffage dans une atmosphère non oxydante, jusqu'à une température d'environ 750°C à environ 2400°C en un corps C/C,
**caractérisé en ce que** le chauffage des deuxième et/ou troisième étapes est réalisé au moins partiellement en faisant passer un courant électrique, dans la masse pressable et/ou le corps vert renforcé pendant le processus de pressage.

2. Procédé selon la revendication 1, **caractérisé en ce qu'**après la troisième étape
- dans une quatrième étape, le corps C/C est infiltré par un métal liquide avec maintien de sa forme, une réaction de la partie carbone de la matrice du corps C/C avec le métal ayant lieu, au moins partiellement, avec formation de carbures.

3. Procédé selon la revendication 1, **caractérisé en ce que** la conductibilité électrique de la masse pressable s'élève, avant ou pendant lé processus de pressage, à au moins 0,1 S/m.

4. Procédé selon la revendication 1, **caractérisé en ce que** la conductibilité électrique du corps vert s'élève à au moins 0,1 S/m.

5. Procédé selon la revendication 1, **caractérisé en ce que** la masse pressable est chauffée par passage du courant électrique sur la surface de couverture et de fond d'un moule de pressage.

## Claims

1. A process for producing shaped bodies comprising fiber-reinforced ceramic materials, where
- a press moulding composition is introduced into a pressing mold, where the press moulding composition comprises carbon fibers and/or carbon fiber bundles and/or carbon filaments
which have preferably been coated with carbon or carbon-containing compounds,
- and pitches and/or resins which are thermally curable and capable of being carbonized in a first step,
- the press moulding composition is cured by heating to a temperature of from 120°C to 280 °C under pressure, in a second step to form a green body,
- the green body is carbonized and/or graphitized in a third step by heating in a nonoxidizing atmosphere to a temperature of from about 750 °C to about 2400 °C to give a C/C body,
wherein heating in the second and/or third step is at least partly effected by an electric current being passed through the press moulding composition and/or the cured green body, during pressing.

2. The process as claimed in claim 1, wherein, subsequent to the third step,
- the C/C body is infiltrated with a liquid metal with retention of its shape in a fourth step, with at least partial reaction of the carbon present in the matrix of the C/C body with the metal to form carbides.

3. The process as claimed in claim 1, wherein the electrical conductivity of the press moulding composition prior to or during the pressing operation is at least 0.1 S/m.

4. The process as claimed in claim 1, wherein the electrical conductivity of the green body is at least 0.1 S/m.

5. The process as claimed in claim 1, wherein the pressable composition is heated by passing electric current through it via the top and bottom surfaces of a pressing mold.
